# EUROPÄISCHE PATENTANMELDUNG

(11) **EP 1 308 935 A2**
(43) Veröffentlichungstag der Anmeldung: **07.05.2003**
(21) Anmeldenummer: 02021408.6
(22) Anmeldetag: 25.09.2002
(51) Int. Cl.: G11B 5/62

(54) **Bandförmiges magnetisches Aufzeichnungsmedium**

(30) Priorität: 23.10.2001 DE 10152287
(71) Anmelder: EMTEC Magnetics GmbH, 67059 Ludwigshafen (DE)
(72) Erfinder: Söder, Jens, 37081 Göttingen (DE); Traub, Hansjörg, Dr., 77731 Willstätt (DE); Keske, Jürgen, 77743 Neuried (DE); Neumann, Wolfgang, 77743 Neuried (DE); Genter, Edgar, 77815 Bühl (DE)

(57) **Zusammenfassung**

Die Erfindung betrifft ein bandförmiges magnetisches Medium, umfassend einen flexiblen Schichtträger, dessen Dicke mindestens 15 µm beträgt und mindestens eine auf dessen eine Seite aufgebrachte magnetische Schicht, deren Schichtdicke mindestens 3 µm beträgt und bei der in einem polymeren Bindemittel fein verteilte magnetische Pigmente eingebettet sind, wobei das Medium eine spezifische Flächenporosität SFP von mindestens 80 cm²/cm² besitzt, wobei die SFP definiert ist als Produkt aus der spezifischen Stickstoffaufnahme pro Volumenelement nach BET der magnetischen Schicht und der Schichtdicke der magnetischen Schicht; ein Verfahren zu dessen Herstellung sowie dessen Verwendung als Masterband bei einem magnetischen Kopierprozeß.

## Beschreibung

Die Erfindung betrifft ein magnetisches Medium, umfassend einen flexiblen Schichtträger und mindestens eine auf dessen eine Seite aufgebrachte magnetische Schicht, bei der in einem polymeren Bindemittel fein verteilte magnetische Pigmente eingebettet sind, ein Verfahren zur Herstellung eines derartigen Mediums sowie dessen Verwendung als Masterband bei einem magnetischen Kopierprozeß.

Magnetische Aufzeichnungsmedien werden in verschiedenen Zusammensetzungen für eine Vielzahl von Anwendungszwecken produziert, beispielsweise für Audiooder Videoaufzeichnungen, für die Aufzeichnung von Daten oder für Kopiervorgänge. Sie werden entweder als bandförmige Medien, als Disketten oder als Karten in den Handel gebracht. Um eine möglichst hohe Aufzeichnungsdichte zu erzielen, müssen die magnetisierbaren Teilchen in sehr hoher Packungsdichte in der Schicht vorliegen, welche bei etwa 70 bis 90 Gewichtsprozent liegt; ebenso sollen die magnetischen Pigmente möglichst feinteilig sein.

Der weitverbreitete Gebrauch von Heimvideogeräten hat die Nachfrage nach bespielten Kassetten, beispielsweise Halbzoll - Videokassetten des VHS - Typs, erheblich vergrößert. Um diesen Bedarf auf wirtschaftliche Weise zu befriedigen, ist es erforderlich, von einem sogenannten Masterband, das die gewünschte magnetische Information trägt, in kurzer Zeit eine große Anzahl von Copybändern, welche die vom Masterband kopierte Information enthalten, herzustellen. Die Herstellung derartiger Kassetten ist nicht ganz einfach, da Masterband, Copyband sowie die mit für den Kopiervorgang verwendeten Vorrichtungen eine ganze Anzahl von Anforderungen erfüllen müssen, damit die Copybänder eine angemessene Bildqualität erhalten.

Ein früher weitverbreitetes "Realtime- Duplizierverfahren" bestand darin, dass die Originalaufzeichnung vom Masterband auf einem üblichen Videorecorder in der systemgegebenen Zeiteinheit, also etwa 2 - 3 cm/s, auf eine Vielzahl von Duplizierrecordern übertragen wurde, die jeweils ein Copyband enthielten. Die lange Zeit sowie die erforderliche Logistik machten dieses Verfahren zu einem sehr teuren Prozeß.

Derzeit haben sich auf dem Markt zwei Schnellkopierprozesse, das sogenannte thermomagnetische und das anhysteretische Verfahren, durchgesetzt, bei denen das Masterband und das Copyband unter engem Kontakt der beiden magnetischen Schichten gemeinsam mit hoher Geschwindigkeit, welche in der Größenordnung von 4 bis 10 m/s liegt, über eine Dupliziereinrichtung geführt werden, wobei auf diese Weise die magnetische Information vom Masterband auf das Copyband übertragen wird. Dazu muß das Masterband eine spiegelbildlich aufgezeichnete Information enthalten ("Mirror-Master"), die beim Schnellkopiervorgang dann seitenrichtig auf das Copyband übertragen wird.

Das thermomagnetische Verfahren beruht darauf, dass während der Kontaktzeit durch die Rückseite des Copybandes ein hochgebündelter Energiestrahl, beispielsweise ein Laserstrahl aufgebracht wird, welcher das Copyband über die Curie-Temperatur hinaus erhitzt, worauf das Copyband anschließend wieder abgekühlt werden muß. Natürlich muß in diesem Fall das Masterband eine deutlich höhere Curietemperatur besitzen, damit dessen eigene magnetische Information nicht darunter leidet.

Das anhysteretische Verfahren beruht darauf, dass während der Kontaktzeit ein externes magnetisches Feld auf das Copyband einwirkt und auf diese Weise die Übertragung der magnetischen Information bewirkt. Damit auch in diesem Fall das Masterband durch diese Vorgehensweise im Informationsgehalt nicht geschädigt wird, darf die Stärke des externen magnetischen Feldes höchstens ein Drittel bis die Hälfte der Koerzitivkraft des Masterbandes besitzen.

Auf dem Markt sind derzeit im wesentlichen zwei Typen von Schnell-Kopiervorrichtungen im Einsatz, welche nach dem anhysteretischen Verfahren arbeiten. Einerseits ist dies der sogenannte Loop - Sprinter, beispielsweise angeboten von der Firma Sony unter der Bezeichnung HSP 800. Dabei wird das Masterband in einer Endlosschleife am Copyband vorbeigeführt wird, was also einen kontinuierlichen Kopierprozeß ermöglicht. Auf der anderen Seite gibt es den sogenannten Shuttle - Sprinter, welcher beispielsweise von der Firma Sony unter der Bezeichnung HSP 5000 vertrieben werden, bei welchem nach Durchlauf eines Kopiervorganges das Masterband zurückgespult wird und anschließend der nächste Kopiervorgang einsetzt.

Von der Anmelderin wurde festgestellt, dass bei den oben beschriebenen Sprintern sowie bei thermomagnetischen Kopiervorrichtungen folgende Störungen auftreten können, die zu Fehlern beim Kopiervorgang führen:
- Zwischen den magnetisch beschichteten Seiten des Copy- bzw. des Masterbandes kann infolge des schnellen Kopiervorgangs ein Luftpolster verbleiben, in Folge dessen ein verringertes Signal auf das Copyband übertragen wird.
- Verstärkt wird dieser Effekt, wenn an einer entsprechenden Stelle auf der Oberfläche des Printwheels ein Schmutzteilchen sitzt. Dann wird durch den sogenannten "Zelt"-Effekt die Übertragung so gestört, dass das Copyband an dieser Stelle einen Signalaussetzer, den sogenannten Dropout, aufweist.
- Bei dem Shuttle-Sprinter, bei welchem wie oben ausgeführt das Drive-Tape den alleinigen Antrieb besorgt, müssen die Oberflächeneigenschaften der beteiligten Bänder so beschaffen sein, dass kein Rutschen zwischen ihnen eintritt.

Aus der DE-A-41 38267 ist ein magnetisches Medium bekannt, bei welchem ein Masterband dann eine große Anzahl von Durchläufen ermöglicht, wenn die Gleitmittelverteilung im Masterband und Copyband bestimmte Werte erfüllt.

Aus der EP-A-0 702 359 ist ein magnetisches Aufzeichnungsmedium bekannt, welches eine Porosität von wenigstens 0,4 m²/g besitzen soll und zur Aufzeichnung bei hoher Speicherdichte geeignet sein soll. Der Schichtträger besitzt eine maximale Dicke von 9µm bei einer Gesamtdicke von bis zu 11 µm. Umgerechnet auf die jeweilige Schichtdicke hat das bekannte Medium eine sehr niedrige spezifische Flächenporosität(SFP), nämlich etwa 3 cm²/cm² bei einer Schichtdicke von 2.5µm.

### Kurze Beschreibung der Erfindung

Es bestand daher die Aufgaben, ein magnetisches Medium der eingangs genannten Art bereitzustellen, welches bei Verwendung als Masterband zu keinen oder deutlich weniger Dropouts auf dem Copyband führt (insbesondere auch bei im normalen Betrieb auftretenden Verschmutzungen des Printwheels. Außerdem sollte ein Band bereitgestellt werden, welches eine verbesserte Lebenszeit besitzt, und somit einen vielfachen Gebrauch als Masterband gestattet, ohne dass die Übertragungseigenschaften beim wiederholten Kopiervorgang leiden. Außerdem sollte bei Verwendung als Masterband im Shuttle-Sprinter-Systemen das Rutschen zwischen Master und Copyband vermieden werden.

Erfindungsgemäß wurden diese Aufgaben gelöst mit einem bandförmigen magnetischen Medium der eingangs genannten Art, insbesondere einem Masterband, bei dem die Dicke der magnetischen Schicht mindestens 3 µm, vorzugsweise etwa 3 bis 8 µm, beträgt, wobei das Medium/die Magnetschicht eine spezifische Flächenporosität SFP von mindestens 80 cm²/cm², vorzugsweise mindestens 90 cm²/cm² besitzt, wobei die SFP definiert ist als spezifische Stickstoffaufnahme pro Volumenelement nach BET der magnetischen Schicht (in cm²/cm³) multipliziert mit der Schichtdicke der magnetischen Schicht (in cm).

Die angegebenen SFP-Werte sind dabei die für das Medium ermittelten Werte, wobei jedoch Träger und gegebenenfalls vorhandene Rückseitenbeschichtung keinen oder nur einen vernachlässigbar geringen Beitrag zur Porosität leisten. Die SFP-Werte charakterisieren daher auch die Porosität des magnetischen Schicht.

Erfindungsgemäß bevorzugt sind magnetische Aufzeichnungsmedien, bei welchen die Dicke des flexiblen Schichtträgers mindestens 15 µm und höchstens 30 µm, wie z.B. etwa 25 µm, beträgt. Kleinere Trägerdicken als 15 µm haben ungenügende Laufeigenschaften des Masterbandes zur Folge, zu hohe Schichtdicken über 30 µm haben ein zu steifes Band zur Folge, so dass der oben beschriebene "Zelt"- Effekt eine Verschlechterung der Dropout-Werte bewirkt.

Weitere bevorzugte Gegenstände entsprechen Medien, wobei deren zweite, nicht mit einer magnetischen Beschichtung beschichtete Seite eine Rauhigkeit R_{z} gemessen mit einem Perthometer, von mindestens 200nm und höchstens 400 nm wie z.B. 250 µm, besitzt oder eine Rückseitenschicht, vorzugsweise mit einer Trockenschichtdicke von etwa 0,5 bis 5 µm, aufweist, welche eine Rauhigkeit R_{z} von mindestens 200 nm und höchstens 400 nm, wie z.B. etwa 235 µm, besitzt.

Ein weiterer Gegenstand der Erfindung betrifft ein Verfahren zur Herstellung eines erfindungsgemäßen magnetischen Mediums des oben beschriebenen Typs, wobei man auf den Schichtträger eine Magnetschicht und gegebenenfalls eine Rückschicht jeweils in herkömmlicher Weise aufträgt, die Magnetschicht falls erforderlich orientiert und trocknet und den beschichteten und getrockneten Aufzeichnungsträger einem Kalandrierungsschritt, vorzugsweise zwischen Presswalzen, unterzieht, wobei der spezifische Druck höchstens 110 bar bzw. der Liniendruck höchstens 250 daN/cm (Deka-Newton pro Zentimeter) beträgt. Die Kalandertemperatur der beheizten Preßwalzen beträgt vorzugsweise höchstens 95°C.

Ein letzter Gegenstand der Erfindung betrifft die Verwendung der erfindungsgemäßen magnetischen Medien als Masterband in einem Schnellkopierprozeß für die Anfertigung von Kopien von magnetischen Aufzeichnungsträgern mit darauf aufgezeichneter Information, wobei Masterband und Copyband unter Kontakt der jeweiligen magnetischen Schichten miteinander mit hoher Geschwindigkeit über eine Kopiereinrichtung geführt werden und wobei die magnetische Information des Masterbandes auf das Copyband dadurch übertragen wird, dass das Copyband über seine Curie-Temperatur hinaus erhitzt wird.

Eine Variante der erfindungsgemäßen Verwendung betrifft die Verwendung der magnetischen Medien als Masterband für die Anfertigung von Kopien von magnetischen Aufzeichnungsträgem mit darauf aufgezeichneter Information, wobei Masterband und Copyband unter Kontakt der jeweiligen magnetischen Schichten miteinander mit hoher Geschwindigkeit über eine Kopiereinrichtung geführt werden und wobei die magnetische Information des Masterbandes auf das Copyband übertragen wird, während ein externes Magnetfeld, dessen Stärke höchstens die Hälfte der Koerzitivkraft des Masterbandes beträgt, auf das Masterband und das Copyband einwirkt.

### Detaillierte Beschreibung der Erfindung

### a. Der unmagnetische Schichtträger:

Der Schichtträger besteht vorwiegend aus einem organischem Polymer. Beispiele für organische Polymere sind Polyester, wie Polyethylenterephthalat und -naphthalat, Polyolefine, Cellulosederivate, Vinylpolymere oder plastische Massen, wie Polycarbonat und Polyimid.

Die Dicke d_{T} des Schichtträgers liegt erfindungsgemäß im Bereich von 15 - 30 µm. Kleinere Trägerdicken als 15 µm haben ungenügende Laufeigenschaften des Masterbandes zur Folge; Schichtdicken über 30 µm haben ein zu steifes Band zur Folge, so dass der sogenannte "Zelt"- Effekt eine Verschlechterung der Dropout-Werte bewirkt. Die mittlere Oberflächenrauhigkeit R_{z} des Schichtträgers liegt zweckmäßigerweise im Bereich von 100 nm. Soll jedoch das magnetische Medium für Kopiervorgänge mit dem bereits beschriebenen Shuttle-Sprinter verwendet werden, so ist es zweckmäßig, dass die zweite, die magnetische Beschichtung nicht tragende Seite des Schichtträgers eine Rauhigkeit R_{z} von etwa 200 bis 400 nm besitzt, und zwar für den Fall, dass auf diese Seite keine zusätzliche Rückseitenbeschichtung aufgebracht wird. Die oben genannten R_{z}- Werte können durch bekannte Mittel bei der Herstellung des Schichtträgers eingestellt werden, beispielsweise durch den Einbau von Pigmenten geeigneter Größe und Geometrie.

Um besonders abgestimmte mechanische Eigenschaften des Aufzeichnungsmediums zu erhalten, können auch mehrere unterschiedliche Polymerzusammensetzungen als Mehrfachschicht, vorzugsweise in einem Arbeitsgang, coextrudiert werden. Falls erforderlich, kann der polymere Schichtträger vor dem Aufbringen der magnetischen Schicht mit einer dünnen Haftschicht, deren Dicke im allgemeinen unter 1 µm liegt, versehen werden. Die Zusammensetzung derartiger Haftschichten ist aus dem Stand der Technik bekannt.

### b. Die auf den Schichtträger aufgebrachte magnetische Schicht:

Die magnetische Aufzeichnungsschicht enthält mindestens ein ferromagnetisches Pulver, bevorzugt ein metallisches Pigment oder Legierungspigment. Diese Pigmente enthalten als Hauptbestandteile Fe, Ni und/oder Co; ferner erforderlichenfalls Al, Si, S, Sc, Ti, V, Cr, Cu, Y, Mo, Pd, Rh, Ag, Sn, Sb, Te, Ba, Ta, W, Re, Au, Hg, Pb, Bi, La, Ce, Pr, Nd, P, Mn, Zn, Co, Ni, Sr oder B, einzeln oder im Gemisch. Die Pigmente können an der Oberfläche eine Schutzhülle gegen Oxidation oder sonstige schädliche Einflüsse oder zur Verbesserung der Dispergierbarkeit aufweisen. Geeignet sind ferner hochkoerzitive ferromagnetische Eisenoxide, Chromdioxid und Ferrite wie Bariumferrit.

Die Metall- und Legierungspulver sind bevorzugt nadel- oder spindelförmig und weisen eine BET-Oberfläche von etwa 40 - 90 m²/g auf. Die Achsenlänge beträgt höchstens 200 nm, das Achsenverhältnis (längs zu quer) liegt im Bereich von 2 bis 20. Die Koerzitivkraft liegt bei mindestens 100 kA/m und die Sättigungsmagnetisierung im Bereich von mindestens 100 bis 180 emu/g. Das Metall- oder Legierungspulver kann einen kleinen Anteil Wasser oder Hydroxid als nichtmetallischen Anteil enthalten.

Bariumferrit ist bevorzugt plättchenförmig mit einer mittleren Teilchengröße von 20 bis 120 nm und einem Achsenverhältnis von 2 bis 10.

Die magnetische Schicht kann ein polymeres Bindemittel mit einer Tg, welche unter 60°C liegt, sowie ein anderes, welches eine Tg von über 60°C besitzt, enthalten. Unter der Glasübergangstemperatur Tg versteht man erfindungsgemäß die gemäß ASTM D 3418-32 durch Differetialthermoanalyse (DSC) ermittelte "midpoint temperature" (vgl. Ullmann's Encyclopedia of Industrial Chemistry, 5. Aufl., Bd. 21A, S.169, VCH Weinheim, 1992; sowie Zosel, Farbe und Lack, 1976, 82, 125-134; und DIN 53765).

Beispiele für Bindemittel mit einer Tg von unter 60°C sind insbesondere Polyurethane mit Ester- oder Ether- oder Carbonatgruppen sowie verschiedene Kautschuke. Beispiele für Bindemittel mit einer Tg von wenigstens 55°C werden im nächsten Abschnitt näher aufgeführt. Vorzugsweise enthalten die Bindemittel polare Gruppen, um die Dispergierfähigkeit der Bindemittel für die weiteren Zusätze, insbesondere die Pigmente zu erhöhen. Beispiel für solche polare Gruppen sind -COOM, -SO₃M, -O-S0_{3'}M, -0-PO₃-M, -PO(OM)₂, Aminogruppen, Ammoniumgruppen, OH-Gruppen, SH-Gruppen sowie Epoxygruppen. Bei den genannten polaren Gruppen stellt M Wasserstoff, Alkalimetall, wie insbesondere Na, Li oder K, oder Ammonium dar.

Bindemittel mit einer Tg von über 60°C können beispielsweise ausgewählt sein unter: Vinylchlorid-Vinylacetat-Copolymere, Vinylchlorid-Copolymere, Vinylchlorid-Vinylidenchlorid-Copolymere, Vinylchlorid-Acrylnitril-Copolymere, Acrylsäureester-Acrylnitril-Copolymere, Acrylsäureester-Vinylidenchlorid-Copolymere, Acrylsäureester-Styrol-Copolymere, Methacrylsäureester-Acrylnitril-Copolymere, Methacrylsäureester-Vinylidenchlorid-Copolymere, Methacrylsäureester-Styrol-Copolymere mit Ester-, Etheroder Carbonatgruppen, Urethanelastomere, Nylon-Silikonharze, Nitrocellulose-Polyamidharze, Polyvinylfluorid, Vinylidenchlorid-Acrylnitril-Copolymere, Butadien-Acrylnitril-Copolymere, Polyamid, Polybutyrale, Cellulosederivate, Styrol-Butadien-Copolymere, Polyesterharze, Chlorvinylether-Acrylsäureester-Copolymere, Aminharze, Phenoxyharze, Epoxyharze, Polyvinylacetalharze, Polyvinylbutyralharze. Diese Bindemittel können für sich allein oder in Kombination eingesetzt werden. Vorzugsweise enthalten auch die vorstehend genannten Bindemittel polare Gruppen zur Erhöhung der Dispergierfähigkeit; als polare Gruppen eignen sich die bereits oben genannten Gruppen.

Als weiteren Zusatz enthält die magnetische Schicht mindestens ein feinteiliges unmagnetisches Pigment. Beispiele für derartige unmagnetische Pigmente sind
- Ruß, dessen Teilchengröße in weiteren Bereichen schwanken kann, beispielsweise zwischen 0,015 - 1µm. Die spezifische Oberfläche des Rußes liegt im allgemeinen zwischen 20 bis 500 m²/g.
- Metalloxide, beispielsweise Chromoxid, Aluminiumoxid, Ceroxid, Eisenoxid, Korund, Titandioxid, Siliziumdioxid, Zinnoxid, Magnesiumoxid, Wolframoxid, Zirkonoxid und Zinkoxid, Metallcarbonate, Metallsulfate, Metallnitride, Metallcarbide oder Metallsulfide. Diese Pigmente haben einen Teilchendurchmesser im Bereich von 0,01 bis 2 µm. Sie können mit einem anorganischen oder organischen Überzug versehen sein. Die Gestalt dieser Pigmente kann nadelförmig, kubisch, kugelförmig oder tafelförmig sein. Die Pigmente haben eine MOHS-Härte von mindestens 4. Besonders bevorzugt sind Pigmente mit eine MOHS-Härte von mindestens 6, ein bevorzugtes Beispiel dafür ist Al₂O₃. Diese Pigmente haben vor allem die Funktion eines Stützpigments.

Des weiteren kann die magnetische Schicht auch einen oder mehrere der folgenden unmagnetischen Zusätze enthalten:
- Gleitmittel, beispielsweise Fettsäuren oder Fettsäureester, Fettsäureamide, Silikonöle, fluorhaltige Verbindungen oder andere. Bevorzugte Gleitmittel sind ausgewählt unter Fettsäuren mit 11 bis 22, vorzugsweise 11 bis 18, Kohlenstoffatomen und Derivaten davon. Nichtlimitierende Beispiele sind Lauryl-, Myristyl-, Palmityl- und Stearylsäure und deren Derivate.
   Ester obiger Fettsäuren sind beispielsweise abgeleitet von ein- oder mehrwertigen, vorzugsweisen einwertigen aliphatischen Alkoholen mit einem gesättigten, geradkettigen oder verzweigten Kohlenwasserstoffrest mit 1 bis 6, vorzugsweise 1 bis 4 Kohlenstoffatomen. Nichtlimitierende Beispiele für derartige Reste sind Methyl, Ethyl, i- oder n-Propyl, n-, i-, sec.- oder tert.-Butyl, n-oder i-Pentyl; außerdem n-Hexyl. Als konkrete nichtlimitierende Beispiele für derartige Ester können C₂-C₄-Alkylester von Stearin-, Palmitin-, Myristin- oder Laurinsäure; insbesondere i- oder n-Butylstearat, -palmitat, -myristat und -laurat oder Mischungen davon, genannt werden.
   Als weitere Beispiele brauchbarer Gleitmittel können okalkylierte Ester obiger Fettsäuren genannt werden, wie z.B. C₂-C₄-Alkyl-di-C₂-C₄-alkylenglycolester von Stearin-, Palmitin-, Myristin- oder Laurinsäure; insbesondere i- oder n-Butyl-diethylenglycolstearat, -palmitat, -myristat und -laurat.
- Leitfähigkeitserhöhende Zusätze, wie Bariumsulfat, Nitrate oder die bereits erwähnten Ruße oder Graphit.
- Vernetzungsmittel, beispielsweise Polyisocyanat,
- Dispergatoren, wie Lecithin, Oxogruppen enthaltende fluorierte Polyether, wie aus der DE-A-40 22 202 bekannt oder aminhaltige Dispergatoren
- Tenside, die in großer Anzahl aus dem Stand der Technik bekannt sind, wie beispielsweise Oxosäuren mit einer hydrophober Kohlenwasserstoffgruppe oder Salze derselben, besonders bevorzugt Phosphorsäureester.

Die Trockendicke der magnetischen Schicht liegt vorzugsweise im Bereich von 3 bis 8 µm, besonders bevorzugt im Bereich von 4 bis 5,5 µm. Zu geringe Trockendicken haben Verminderung der Sättigungsmagnetisierung sowie vor allem der Porosität zur Folge, während zu hohe Trockendicken über 8 µm bereits eine Verringerung des Schichtzusammenhalts bewirken können.

Erfindungsgemäß besitzt das Aufzeichnungsmedium eine spezifische Flächenporosität SFP von mindestens 80 cm²/cm², vorzugsweise von mindestens 90 cm²/cm², wobei die SFP definiert ist als spezifische Stickstoffaufnahme pro Volumenelement nach BET der magnetischen Schicht (in cm²/ cm³) multipliziert mit der Schichtdicke (in cm) der magnetischen Schicht. Die Anmelderin hat gefunden, wie auch die nachfolgenden Beispiele belegen, dass auf diese Weise das beim Aufeinanderpressen von Masterband und Copyband gebildete Luftpolster durch Aufnahme in der porösen magnetischen Schicht verschwindet und so ein direkter Kontakt der magnetischen Aufzeichnungsschichten von Masterband und Copyband beim Kopiervorgang erfolgt, wodurch die magnetische Aufzeichnung auf dem Copyband nur wenige Dropouts hat und eine einwandfreie Bildqualität besitzt. Dies bewährt sich besonders dann, wenn sich im Lauf des Kopierprozesses auf dem Printwheel immer mehr Schmutzteilchen ansammeln. Bei Masterbändern mit einer SFP von mindestens 80 cm²/cm² werden auf dem Copyband merklich weniger Dropouts beobachtet als bei einem Masterband mit entsprechend geringerer SFP.

Die Poren werden wie folgt gemessen: Ein mit dem Prüfling gefülltes Adsorptionsgefäß wird mit einem leeren Adsorptionsgefäß , welches als Nullprobe dient, verglichen, wobei beide Gefäße mit Stickstoff gefüllt sind. Die Stickstoffaufnahme des Prüflings wird gemessen und daraus die Porosität NAP, welches eine spezifische Oberfläche beinhaltet, errechnet. Dies geschieht mit einem AREA-Meter nach dem BET - Verfahren, mit welchem auch die spezifische Oberfläche, beispielsweise von Pigmenten, bestimmt wird. Diese Messung gibt an, wieviel Stickstoff von einem bestimmten Volumenelement des Prüflings, im vorliegenden Fall des Aufzeichnungsmediums, aufgenommen werden kann unter der Voraussetzung einer monomolekularen Belegung der Oberfläche und einem nichtporösen Schichtträger und gegebenenfalls vorhandener nichtporöser Rückseitenschicht, so dass die Porosität der magnetischen Schicht gemessen wird. Die Einheit ergibt sich somit zu m²/cm³ und ist somit unabhängig von der Schichtdicke der magnetischen Schicht. Durch Multiplikation mit der Schichtdicke ergibt sich dann aus der NAP die SFP, also die spezifische Flächenporosität, deren Einheit in cm²/ cm² angegeben wird.

Während erfindungsgemäß die untere Grenze der SFP wie oben definiert bei 80 cm²/cm², vorzugsweise bei 90 cm²/cm² liegen soll, ist die obere Grenze in erster Linie durch den notwendigen Schichtzusammenhalt gegeben, ohne den Abriebprobleme beim Aufzeichnungsmedium entstehen. Diese obere Grenze liegt bei 200 cm²/cm², vorzugsweise bei 180 cm²/cm².

Die Anmelderin hat gefunden, dass die erfindungsgemäße Porosität auf unterschiedliche Weise erreicht werden kann, beispielsweise durch die Porosität der oben angegebenen Inhaltsstoffe der magnetischen Schicht, insbesondere der Pigmente. Es ist aber auch möglich, die einzustellende Porosität durch das unten noch näher zu beschreibende Herstellverfahren zu erreichen, insbesondere durch gezieltes Verdichten bzw. Kalandrieren des fertig hergestellten magnetischen Aufzeichnungsmediums.

### c. Die gegebenenfalls auf dem Schichtträger aufgebrachte rückwärtige Beschichtung:

Gegebenenfalls kann auf der anderen, der Magnetschicht abgewandten Seite des Schichtträgers zur Verbesserung der mechanischen Eigenschaften des erfindungsgemäßen Aufzeichnungsmediums, insbesondere zur Erzielung der für den Sprinterprozeß notwendigen Rauhigkeit eine im wesentlichen aus dem Stand der Technik bekannte Rückseitenschicht aufgebracht werden. Diese Rückseitenschicht kann folgende Zusätze enthalten:
- Bindemittel wie oben beschrieben
- Ruß oder Rußmischungen
- Tenside, wie z.B. oben für die Magnetschicht angegeben
- Gleitmittel, wie z.B. oben für die Magnetschicht angegeben
- Vernetzungsmittel, wie z.B. Polyisocyanat
- Unmagnetische Pigmente, so wie unter den Zusätzen für die magnetische Schicht beschrieben. Geeignet sind beispielsweise unmagnetische Pigmente, wie sie in der EP-A- 0 869 480 aufgeführt sind.

Die Rauhigkeit R_{z} der Rückseitenbeschichtung soll mindestens 200nm und höchstens 400 nm betragen; die Trockenschichtdicke liegt zwischen 0.5 bis 5 µm, vorzugsweise zwischen 0.7 bis 4 µm.

### Herstellung erfindungsgemäßer Aufzeichnungsmedien:

Aus den oben beschriebenen zwingenden und ggf. optionalen Bestandteilen werden in an sich bekannter Weise Dispersionen hergestellt.

Das Verfahren zur Herstellung brauchbarer Dispersionen ist an sich bekannt und kann eine Knetstufe, eine Dispergierstufe und gegebenenfalls eine Mischstufe, die vor und nach den vorhergehenden Stufen vorgesehen sein kann, umfassen. Die jeweiligen Stufen können jeweils aus zwei oder mehr Arbeitsschritten zusammengesetzt sein. Bei der Herstellung der Zusammensetzung können alle Ausgangsmaterialien, nämlich das ferromagnetische Pulver, die Bindemittel, die Ruße, die Schleifmittel oder Stützpigmente, die Antistatikmittel, die Schmiermittel, die Netzmittel sowie die Dispergierhilfsmittel sowie vorwiegend organische Lösungsmittel gleich zu Beginn des Verfahrens oder später während des Verfahrens dem Reaktor zugesetzt werden. Beispiele hierfür sind Tetrahydrofuran, Methyethylketon, Cyclohexanon, Dioxan, Aceton, Ester wie Butyl-, Ethyl- oder Methylacetat, Glycolmonoethyetheracetat, Glycol, Wasser oder aromatische Kohlenwasserstoffe. Diese können einzeln oder in Kombination eingesetzt werden.

Der Vernetzer, sowie gegebenenfalls ein Vernetzungskatalysator wird vorzugsweise nach Abschluß der Dispersionsherstellung zugegeben.

Nach Feinfiltration durch engmaschige Filter mit einer Weite von höchstens 5 µm werden die Dispersionen mittels einer konventionellen Beschichtungsvorrichtung mit Geschwindigkeiten im üblichen Bereich aufgetragen, im Magnetfeld in im wesentlichen longitudinaler Aufzeichnungsrichtung ausgerichtet, getrocknet und nachfolgend einer Kalanderbehandlung und gegebenenfalls einer weiteren Oberflächen-Glättungsbehandlung unterzogen.

Dabei bedeutet "im wesentlichen longitudinal ausgerichtet", dass die magnetischen Teilchen zwar im wesentlichen in der Schichtebene in Aufzeichnungsrichtung orientiert vorliegen, jedoch auch schräg zur Schichtebene orientiert angeordnet sein können.

Zur Herstellung des erfindungsgemäßen magnetischen Aufzeichnungsmediums kann die Beschichtung mittels Rakelgießer, Messergießer, Abstreifgießer, Extrudergießer, Reverse-Roll-Coater oder Kombinationen daraus erfolgen.

Nach dem Beschichten erfolgt Trocknung und gegebenenfalls Kalandrierung des Mediums. Die Kalandrierung geschieht auf üblichen Maschinen mittels Hindurchführen der getrockneten Bahnen zwischen geheizten und polierten Walzen, unter Anwendung von bestimmtem Druck und definierter Temperatur. Dabei wird das magnetische Aufzeichnungsmedium geglättet und verdichtet.

Um die erfindungsgemäße Porosität zu erreichen , wird zweckmäßigerweise ein Druck von etwa 90 bar bis maximal 110 bar gewählt, welches einem Liniendruck von 210 bis 250 daN/cm entspricht und wobei ferner eine Kalandertemperatur im Bereich von 70°C bis höchstens 95°C gewählt wird, wie auch die nachfolgenden Beispiele belegen. Zu hoher Druck bzw. zu hohe Kalandertemperatur verringern die SFP unter den erfindungsgemäßen Wert, während zu niedriger Druck bzw. zu niedrige Kalandertemperatur den Schichtzusammenhalt der magnetischen Schicht nicht mehr gewährleisten, so dass Abrieb auftritt.

Das so erhaltene magnetische Medium wird in die gewünschte Gebrauchsform geschnitten und den üblichen elektromagnetischen sowie mechanischen Prüfungen unterzogen; außerdem wird der Pegel sowie das Dropoutverhalten eines vom Masterband im Schnellkopierverfahren kopierten Copybandes untersucht.

### Figurenbeschreibung

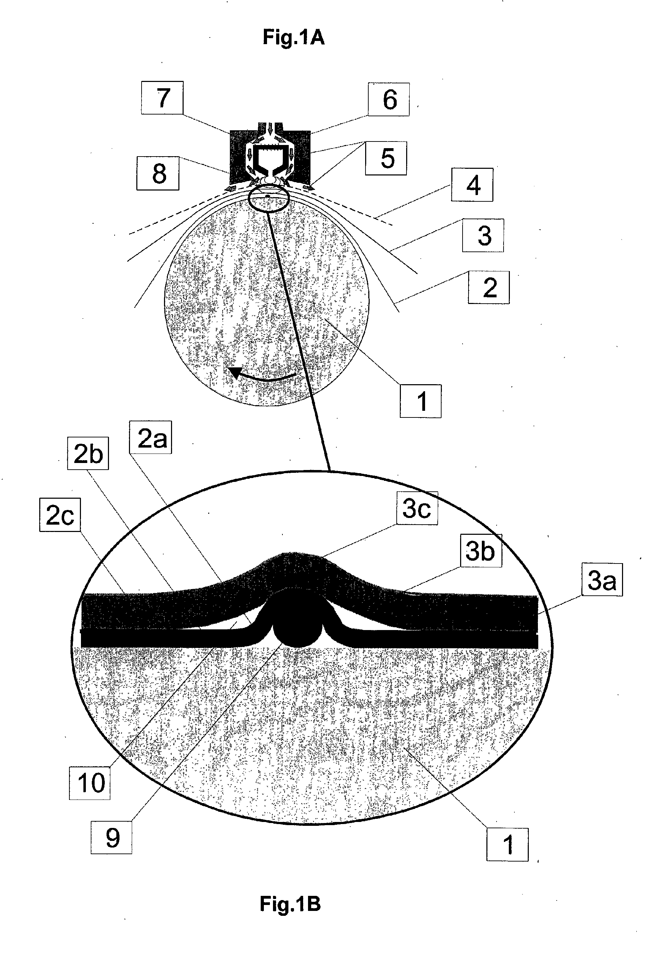

Die Figur 1 A zeigt im oberen Teil die wesentlichen Merkmale der zur Durchführung des anhysteretischen Schnellkopierverfahrens benötigten Vorrichtung ("Sprinter").

Im Fall des Loop-Sprinters läuft über die Umfangsfläche eines angetriebenen Rades 1 ("Printwheel") das Copyband 2 und im Kontakt mit diesem das Masterband 3, beide werden mit gleicher Geschwindigkeit angetrieben. Master- und Copyband haben also gegeneinander keine Relativgeschwindigkeit, sondern laufen mit gleicher Geschwindigkeit über das Printwheel 1.

Beim Shuttle-Sprinter läuft das Printwheel 1 auf einem Luftpolster; Copy- und Masterband 2, 3 sind auf gleichen Zug geregelt angetrieben; dafür umfasst die Shuttle-Sprinter-Vorrichtung noch zusätzlich ein angetriebenes "Drive-Tape" 4, welches mit seiner einen Seite das Masterband 3 und damit auch das Copyband 2 antreibt.

Durch Preßluft 5, welche aus Ausströmkanälen austritt, werden Master- und Copyband und im Fall des Shuttle-Sprinters auch das Drive-Tape auf das Printwheel 1 gepreßt, um einen möglichst engen Kontakt zur Übertragung der magnetischen Information zu bewerkstelligen. Ein Elektromagnet 6,7 beaufschlagt das Copyband 2 mit seinem Magnetfeld 8.

Figur 1 B zeigt eine Vergrößerung des im oberen Teil der Figur eingekreisten Ausschnitts. Dabei bedeutet 2a die magnetische Schicht des Copybandes 2, 2b den Schichtträger sowie 2c eine Rückseitenschicht. Entsprechend stellen die Bezugszeichen 3a, 3b und 3c die magnetische Schicht, den Schichtträger und die Rückseitenschicht des Masterbandes 3 dar. Die magnetischen Schichten 2a und 3a des Copyund des Masterbands werden also im direkten Kontakt zueinander geführt. Wenn an einer Stelle auf der Oberfläche des Printwheels 1 ein Schmutzteilchen 9 sitzt, dann kann durch den sogenannten "Zelt"-Effekt, d.h. eine Art von Holraumbildung, welche durch das Bezugszeichen 10 veranschaulicht wird, die Übertragung so gestört werden, dass das Copyband an dieser Stelle einen Signalaussetzer, den sogenannten Dropout, aufweist.

Die folgenden Beispiele sollen die Erfindung näher erläutern, ohne sie jedoch darauf zu beschränken.

### Beispiel 1

Auf einen 19.5 µm dicken Schichtträger aus Polyethylentherephthalat, welcher auf beiden Seiten eine mit einem Perthometer gemessene Rauhigkeit Rz von 123 nm besaß, wurde mittels eines Messergießers eine magnetische Schicht mit der folgenden Zusammensetzung gezogen.

| | |
|---|---|
| Metallpigment Co/Fe/AI/Y (Hc 162 kA/m) | 100 |
| α-Aluminiumoxid, Teilchengröße 0.4 µm | 10 |
| Rußpigment, Teilchengröße 25 nm | 2 |
| Polyvinylchlorid-Copolymer mit Sulfonatgruppen | 13 |
| Polyesterurethan-Copolymer mit Na-Sulfonatgruppen | 8 |
| Phosphorsäureester | 1 |
| Stearinsäure | 2 |
| 2-Hexyl-1-decylstearat | 1 |
| Diisocyanat | 4 |
| Tetrahydrofuran | 300 |
| Dioxan | 290 |

Die angegebene Zusammensetzung wurde mit Trockenschichtdicken vergossen, welche aus der unten angeführten Tabelle hervorgehen. Ebenfalls angegeben sind die Kalanderbedingungen, nämlich Temperatur der beheizten Walze sowie Kalanderdruck. In der Tabelle sind ebenfalls die für die erfindungsgemäßem Beispiele B1/3 bis B1/6 sowie die Vergleichsbeispiele VB1/1 und 1/2 jeweils ermittelten SFP- und Dropout-Werte angegeben. Die Dropout-Werte wurden an einem käuflichen Magnetband, welches als Copyband mit einer Geschwindigkeit von 8 m/s an einem Loop-Sprinter kopiert wurde, ermittelt.

Die Dropout-Werte wurden in folgender Weise ermittelt: Auf der Oberfläche des zum Kopierprozeß benutzten Printwheels wurden an zwei Stellen jeweils ein Flächenstück von etwa 1 x 1 mm eines 17 µm dicken Klebebandes als künstliches Schmutzpartikel 9 (vgl. Figur 1) aufgeklebt. Dann wurde die Aufzeichnung des Masterbandes im Loop-Sprinter auf das Copyband übertragen, worauf die an der künstlichen Fehlerstelle am Copyband aufgetretenen Dropout-Werte in üblicher Weise bestimmt wurden.

Wie aus der beiliegenden Tabelle ersichtlich ist, korrespondieren in eindeutiger Weise jeweils höhere SFP mit niedrigeren Dropout-Werten.

Mit einem Masterband gemäß dem erfindungsgemäßen Beispiel 1/3 war es möglich, 13 000 Copybänder ohne Störung der Übertragungseigenschaften herzustellen, während mit einem nach dem Vergleichsbeispiel 1/2 hergestellten magnetischen Aufzeichnungsmedium als Masterband lediglich 3 800 Kopien hergestellt werden konnten.

### Beispiel 2

Ein gemäß dem Beispiel 1 hergestelltes magnetisches Aufzeichnungsmedium , welche die Werte gemäß dem Beispiel 1/3 besaß, wurde als Masterband für das thermomagnetische Duplizierverfahren verwendet. Dabei wurde mittels einer thermomagnetischen Dupliziereinrichtung der Firma Otari das Masterband mit einem Copyband mit einer Geschwindigkeit von 10 m/s über die Vorrichtung gefahren. Das magnetische Pigment des Masterbandes hatte eine Curietemperatur von 1043 °K, das des Copybandes eine solche von 387 °K. Mit diesem Masterband konnten mehrere tausend Kopierbänder mit einwandfreier Qualität hergestellt werden.

### Beispiel 3

Es wurde verfahren wie im Beispiel 1, jedoch betrug die Rauhigkeit Rz des Schichtträgers auf der anderen, der magnetischen Schicht gegenüberliegenden Seite 230 nm. Ein solches Band erlaubte auch den Kopiervorgang an einem Shuttle- Sprinter mit einer Kopiergeschwindigkeit von 4.5 m/s.

### Beispiel 4

Es wurde verfahren wie im Beispiel 1, jedoch wurde auf die andere, der magnetischen Beschichtung gegenüberliegenden Seite mittels eines Knive-Reverse-Roll- Coaters eine Rückseitenbeschichtung mit der folgenden Zusammensetzung gegossen.

| | |
|---|---|
| Ruß,Teilchengröße 30nm | 75 |
| Kieselsäure, Teilchengröße 3 µm | 20 |
| Zinkferrit | 5 |
| Phenoxyharz | 90 |
| Polyesterurethan-Copolymer mit Sulfonatgruppen | 70 |
| Polyesterharz | 10 |
| Stearinsäure | 2.5 |
| Polydimethylsiloxan | 1 |
| Diisocyanat | 80 |
| Tetrahydrofuran | 1150 |
| Dioxan | 1050 |

Diese Rückschicht besaß eine Trockendicke von 1.6 µm und eine Rauhigkeit Rz von 240nm. Ein derart hergestelltes Band erlaubte wie beim Beispiel 2 den kopiervorgang auch an einem Shuttle- Sprinter mit einer Kopiergeschwindigkeit von 4.5 m/s.

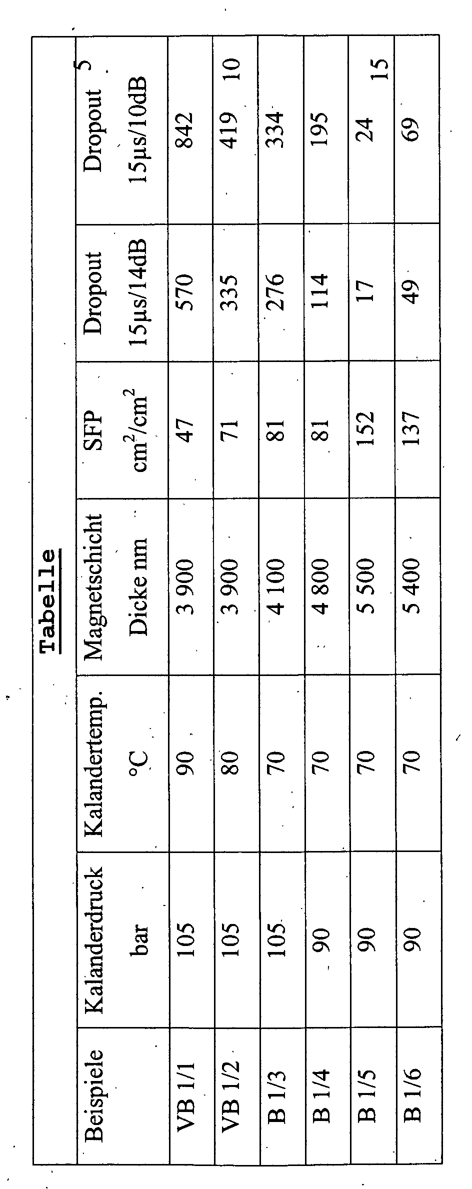

## Patentansprüche

1. Bandförmiges magnetisches Medium, umfassend einen flexiblen Schichtträger und mindestens eine auf der ersten Seite des Schichtträgers aufgebrachte magnetische Schicht, enthaltend in einem polymeren Bindemittel magnetische Pigmente, wobei die magnetische Schicht eine Dicke d_{M} von mindestens 3 µm und eine spezifische Flächenporosität SFP von mindestens 80 cm²/cm² besitzt, wobei die SFP definiert ist als das Produkt aus spezifischer Stickstoffaufnahme pro Volumenelement nach BET der magnetischen Schicht (in cm²/cm³) und der Schichtdicke d_{M} der magnetischen Schicht (in cm).

2. Magnetisches Medium nach Anspruch 1, wobei die SFP nach BET mindestens 90 cm²/cm² beträgt.

3. Magnetisches Medium nach den Ansprüchen 1 und 2, wobei der Schichtträger eine Dicke d_{T} im Bereich von etwa 15 µm bis 30 µm besitzt.

4. Magnetisches Medium nach den Ansprüchen 1 bis 3, wobei die zweite, die magnetische Schicht nicht tragende Seite des Schichtträgers eine Rauhigkeit R_{z} im Bereich von 200 nm bis 400 nm besitzt.

5. Magnetisches Medium nach den Ansprüchen 1 bis 3, wobei auf die zweite Seite des Schichtträgers, eine Rückseitenbeschichtung aufgebracht ist, umfassend in einem polymeren Bindemittel verteilte Pigmente.

6. Magnetisches Medium nach Anspruch 5, wobei die Rauhigkeit R_{z} der Rückseitenbeschichtung mindestens 200 nm und höchstens 400 nm beträgt.

7. Magnetisches Medium nach einem der Ansprüche 5 und 6, wobei die Trokkendicke d_{R} der Rückseitenbeschichtung im Bereich von 0.5 bis 5 µm liegt.

8. Magnetisches Medium nach den Ansprüchen 1 bis 7, wobei die Trockendicke d_{M} der magnetischen Schicht im Bereich von 3 bis 8 µm liegt.

9. Verfahren zur Herstellung eines magnetischen Mediums gemäß den Ansprüchen 1 bis 8, wobei man auf den Schichtträger eine Magnetschicht und gegebenenfalls eine Rückschicht jeweils in herkömmlicher Weise aufträgt, die Magnetschicht falls erforderlich orientiert und trocknet und den beschichteten und getrockneten Aufzeichnungsträger einem Kalandrierungsschritt zwischen Preßwalzen unterzieht, wobei der spezifische Druck höchstens 110 bar bzw. der Liniendruck höchstens 250 daN/cm beträgt.

10. Verfahren nach Anspruch 9, wobei der beschichtete und getrocknete Aufzeichnungsträger einem Kalandrierungsvorgang zwischen Preßwalzen unterzogen wird, wobei die Kalandertemperatur der beheizten Preßwalzen höchstens 95 °C beträgt.

11. Verwendung des magnetischen Mediums gemäß den Ansprüchen 1 bis 8 als Masterband für die Anfertigung von Kopien von magnetischen Aufzeichnungsträgern mit darauf aufgezeichneter Information, wobei Masterband und Copyband unter Kontakt der jeweiligen magnetischen Schichten miteinander mit hoher Geschwindigkeit über eine Kopiereinrichtung geführt werden und wobei dadurch die magnetische Information des Masterbandes auf das Copyband überfragen wird, indem das Copyband über seine Curie- Temperatur hinaus erhitzt wird.

12. Verwendung des magnetischen Mediums gemäß den Ansprüchen 1 bis 8 als Masterband für die Anfertigung von Kopien von magnetischen Aufzeichnungsträgern mit darauf aufgezeichneter Information, wobei Masterband und Copyband unter Kontakt der jeweiligen magnetischen Schichten miteinander mit hoher Geschwindigkeit über eine Kopiereinrichtung geführt werden und wobei dadurch die magnetische Information des Masterbandes auf das Copyband übertragen wird, wobei ein externes Magnetfeld, dessen Stärke höchstens die Hälfte der Koerzitivkraft des Masterbandes beträgt, auf das Masterband und das Copyband einwirkt.
